# EUROPÄISCHE PATENTSCHRIFT

(11) **EP 3 978 294 B1**
(45) Veröffentlichungstag und Bekanntmachung des Hinweises auf die Patenterteilung: **29.01.2025**
(21) Anmeldenummer: 21195605.7
(22) Anmeldetag: 08.09.2021
(51) Int. Cl.: B60K 35/00, G02B 27/01, G01C 21/36, G08G 1/16, G08G 1/0962, G08G 1/0968, B60K 35/23, B60K 35/28

(54) **HEAD-UP-DISPLAYEINRICHTUNG UND VERFAHREN ZUM BETREIBEN EINER HEAD-UP-DISPLAYEINRICHTUNG**
HEAD-UP DISPLAY DEVICE AND METHOD FOR OPERATING A HEAD-UP DISPLAY DEVICE
DISPOSITIF D'AFFICHAGE TÊTE HAUTE ET PROCÉDÉ DE FONCTIONNEMENT D'UN DISPOSITIF D'AFFICHAGE TÊTE HAUTE

(30) Priorität: 30.09.2020 DE 102020212412
(43) Veröffentlichungstag der Anmeldung: 06.04.2022
(73) Patentinhaber: VOLKSWAGEN AG, 38440 Wolfsburg (DE)
(72) Erfinder: Kunze, Dr. Alexander, 13585 Berlin (DE); Wuttke, Ulrich, 38126 Braunschweig (DE)

(56) Entgegenhaltungen:
- DE-A1- 102015 222 844
- JP-A- 2020 132 137
- US-A1- 2021 372 810

## Beschreibung

Die Erfindung betrifft ein Verfahren zum Betreiben einer Head-Up-Displayeinrichtung und eine solche Head-Up-Displayeinrichtung, wobei die Head-Up-Displayeinrichtung für ein Kraftfahrzeug vorgesehen ist. Bei dem Kraftfahrzeug kann es sich insbesondere um einen Personenkraftwagen oder einen Lastkraftwagen handeln.

Head-Up-Displayeinrichtungen (kurz: Head-Up-Displays) zum Einblenden virtueller Objekte oder, mit anderen Worten, virtueller Inhalte in ein Sichtfeld eines Fahrers sind auf dem Gebiet der Kraftfahrzeuge bekannt. Aus Sicht des Fahrers überlagern die eingeblendeten virtuellen Objekte die Umgebung. Die Einblendung kann bekanntermaßen an der Innenseite einer Windschutzscheibe erfolgen, z.B. durch Projizieren der Objekte darauf. Auch das Vorsehen gesonderter Projektionsflächen und insbesondere transparenter Projektionsscheiben ist bekannt, auf die die Objekte projiziert werden. Technologischer Hintergrund zu allgemeinen Head-Up-Displays offenbaren z.B. die US 2019/0043392 A1 und FR 3 060 774 A1.

Aus der DE 10 2019 206 490 B3 ist ferner eine Head-Up-Displayeinrichtung mit Erweiterte-Realität-Funktion bekannt. Dabei werden grafische Elemente in Abhängigkeit einer Distanz des Kraftfahrzeugs zu einem Objekt in der Umgebung des Kraftfahrzeugs eingeblendet.

Um das Einblenden der Objekte möglichst zuverlässig zu ermöglichen und beispielsweise vorausschauend zu planen, ist es bekannt, virtuelle Umgebungsmodelle eines Kraftfahrzeugs zu betrachten bzw. zu erzeugen. Hierüber können einblendbare virtuelle Objekte bestimmten Umgebungsbereichen des Kraftfahrzeugs zugeordnet und dadurch in dem Umgebungsmodell positioniert. Sobald diese Objekte bzw. der Umgebungsbereich, denen sie zugeordnet sind, in ein Sichtfeld der Head-Up-Displayeinrichtung gelangen oder, mit anderen Worten, mit einem solchen Sichtfeld überlappen oder sich hiermit überlagern, können die Objekte eingeblendet werden. Aus Sicht des Fahrers werden die Objekte dann besonders positionsgerecht und/oder in Bezug auf die Umgebung ortsgebunden eingeblendet.

Insbesondere kann also vorgesehen sein, Objekte realen (und z.B. per Umgebungsmodell modellierten) Umgebungsbereichen zuzuordnen und diese auch entsprechend ortsbezogen und/oder perspektivisch und insbesondere dreidimensional angepasst darzustellen. Dies ist eine typische Funktion von Erweiterte-Realität-Head-Up-Displayeinrichtung. Solche Objekte können auch als kontaktanaloge Objekte oder Anzeigeelemente bezeichnet werden. Es kann sich hierbei z.B. um Hervorhebungen (beispielsweise Umrahmungen) realer Umgebungsobjekte handeln, z.B. Verkehrsschilder. Ebenso kann es sich um Navigationsanweisungen handeln, z.B. Abbiegepfeile oder allgemeine Fahrtrichtungspfeile, die z.B. bestimmten Fahrbahnen oder Kreuzungsmittelpunkten zugeordnet sind. Ebenso können aber allgemeine Hinweise eingeblendet werden, die nicht zwingend einem entsprechenden Objekt in der Umgebung zugeordnet sind, sondern z.B. lediglich einem bestimmten Umgebungsbereich, für den diese Hinweise Gültigkeit besitzen. Hierbei kann es sich z.B. um Warnhinweise, z.B. ein Glatteissymbol, oder um Hinweise betreffend eine zulässige Geschwindigkeit handeln. In einem Umgebungsmodell können derartige Hinweise bestimmten Umgebungsbereichen zugeordnet werden und wenn sich das Kraftfahrzeug darin befindet und/oder der Umgebungsbereich von dem Sichtfeld erfasst wird, kann eine entsprechende Einblendung erfolgen.

Es wurde erkannt, dass dieses Vorgehen derzeit aber noch nicht in gewünschter Weise gelingt. Zum einen kann ein Einblenden in den Sichtbereich aus Sicht des Fahrers unerwünscht spät erfolgen, wenn dies erst dann erfolgt, wenn das entsprechende Objekt und/oder der dazugehörige Umgebungsbereich unmittelbar im Sichtfeld der Head-Up-Displayeinrichtung liegt. Weiter kann auch der Fall auftreten, dass ein Fahrer das Sichtfeld derart verstellt, dass für ihn wesentliche Objekte (z.B. Navigationsanweisungen), die an einen realen Umgebungsort geknüpft sind (z.B. den Mittelpunkt einer Kreuzung), sich während der Fahrt gar nicht mit dem Sichtfeld überlappen. Der Fahrer läuft somit Gefahr, diese Anweisungen zu verpassen. Möglichkeiten zum Einstellen eines Sichtfelds einer Head-Up-Displayeinrichtung durch einen Fahrer (beispielsweise direkt oder mittelbar durch Variieren der sogenannten Eyebox) sind im Stand der Technik bekannt.

Aus der DE 10 2015 222 844 A1 und der JP 2020 132 137 A sind gattungsgemäße Head-Up-Displayeinrichtungen bekannt.

Es besteht somit ein Bedarf dafür, das Einblenden von Objekten in einer Head-Up-Displayeinrichtung zuverlässiger zu gestalten, insbesondere wenn die Objekte Umgebungsbereichen des Kraftfahrzeugs zugeordnet sind.

Diese Aufgabe wird durch ein Verfahren mit den Merkmalen des beigefügten Anspruchs 1 und eine Head-Up-Displayeinrichtung mit den Merkmalen des nebengeordneten Vorrichtungsanspruchs gelöst. Vorteilhafte Weiterbildungen sind in den abhängigen Ansprüchen angegeben.

Allgemein wird vorgeschlagen, eine Head-Up-Displayeinrichtung gemäß unterschiedlicher Betriebsmodi zu betreiben. In einem Normalanzeigemodus wird die Head-Up-Displayeinrichtung in herkömmlicher Weise betrieben und dann, wenn ein bestimmter Umgebungsbereich in einem Sichtfeld der Head-Up-Displayeinrichtung liegt, wird ein diesem Umgebungsbereich zugeordnetes Objekt eingeblendet. Die Einblendung erfolgt dabei bevorzugt dreidimensional und/oder perspektivisch. Insbesondere erfolgt die Einblendung derart, dass sich das Objekt aus Sicht des Fahrers an dem entsprechenden Umgebungsbereich ortsbezogen mit diesem überlagert, also als Teil der insbesondere in Fahrtrichtung vorausliegenden Umwelt erscheint. Derartige Einblendungen sind prinzipiell bekannt und können insbesondere mittels sogenannter Augmented-Reality-Head-Up-Displays der vorstehend erläuterten Art erfolgen. Die hierin vorgestellte Head-Up-Displayeinrichtung kann entsprechend eine solche Erweiterte-Realität-Head-Up-Displayeinrichtung sein und/oder allgemein zum Einblenden von Erweiterte-Realität-Objekten eingerichtet sein, beispielsweise durch entsprechend perspektivisches und/oder dreidimensionales Einblenden und/oder ortsbezogenes Einblenden mit entsprechend (aus Sicht des Fahrers) ortsbezogener Überlagerung mit der Realität.

Wird jedoch festgestellt, dass sich ein einblendbares Objekt nicht oder zumindest nicht vollständig in einem Sichtfeld der Head-Up-Displayeinrichtung befindet, würden gewöhnliche Head-Up-Displayeinrichtungen dieses Objekt nicht einblenden. Der Fahrer könnte daraufhin einen eigentlich wichtigen Hinweis, insbesondere einen Warn- oder Navigationshinweis, oder auch eine allgemeine Information versäumen. Die vorliegende Lösung sieht daher vor, in diesem Fall die Head-Up-Displayeinrichtung in einem Ersatzanzeigemodus zu betreiben, in dem dennoch eine virtuelle Einblendung stattfindet. Insbesondere kann die Einblendung in Kenntnis und/oder in Abhängigkeit des einblendbaren Objekts stattfinden, das sich aktuell nicht mit dem Sichtfeld überlagert.

Bevorzugt sieht die Erfindung vor, lediglich ein einem Umgebungsbereich zugeordnetes Objekt einzublenden oder zur Aktivierung des Normalanzeigemodus und/oder Ersatzanzeigemodus zu betrachten. So können zwar z.B. in einem Umgebungsmodell eine Vielzahl von prinzipiell einblendbaren Objekten festgelegt sein, beispielsweise in Abhängigkeit von einer vom Fahrer ausgewählten oder wahrscheinlich erscheinenden Fahrroute. Bevorzugt wird dann aber stets nur lediglich das voraussichtlich als nächstes einzublendende Objekt betrachtet, beispielsweise das Objekt, zu dem das Kraftfahrzeug die geringste Distanz aufweist bzw. das zu einem Umgebungsbereich mit einer entsprechend geringsten Distanz zum Kraftfahrzeug gehört. Dies ermöglicht eine zuverlässige Festlegung dahingehend, welches einblendbare Objekt aktuell zur Auswahl des Normalanzeigemodus oder Ersatzanzeigemodus betrachtet werden soll, also beispielsweise maßgeblich dafür sein soll, welcher dieser Modi aktiviert wird. Die Displayeinrichtung kann unabhängig davon aber stets auch nicht-ortsbezogene Objekte und Informationen einblenden, die z.B. keinen spezifischen Umgebungsbereichen zugeordnet sind.

Erfindungsgemäß wird ein Verfahren zum Betreiben einer Head-Up-Displayeinrichtung für ein Kraftfahrzeug gemäß Anspruch 1 vorgeschlagen.

Selbstverständlich kann auch eine Mehrzahl von einblendbaren virtuellen Objekten einem Umgebungsbereich, dann aber bevorzugt jeweils einem individuellen Umgebungsbereich, zugeordnet werden. Wie vorstehend erläutert, wird zur Auswahl zwischen den unterschiedlichen Anzeigemodi dann aber bevorzugt lediglich eines dieser Objekte betrachtet und insbesondere ein prinzipiell als nächstes einzublendendes Objekt (z.B. ein entlang einer Fahrroute des Kraftfahrzeugs als nächstes einzublendendes Objekt).

Das Verfahren kann auch die Maßnahme umfassen, zu ermitteln, ob sich das Objekt mit dem Sichtfeld überlappt (bzw. darin befindet) oder nicht. Je nach entsprechendem Ergebnis kann dann einer der genannten Anzeigemodi ausgewählt werden. Das Zuordnen von Objekten zu Umgebungsbereichen kann ebenfalls Teil des Verfahrens sein.

Das Zuordnen des virtuellen Objekts zu dem Umgebungsbereich kann virtuell stattfinden, beispielsweise per entsprechender Festlegung in einer Datenbank und/oder Assoziieren oder Zuordnen von Umgebungskoordinaten des Umgebungsbereichs zu dem virtuellen Objekt. Insbesondere kann das virtuelle Objekt virtuell in oder an dem Umgebungsbereich positioniert werden, beispielsweise in einem Umgebungsmodell. Dies kann gleichbedeutend damit sein, dass dem Objekt entsprechend Koordinaten des Umgebungsbereichs in dem Umgebungsmodell bzw. dessen Koordinatensystem zugeordnet werden. Anders ausgedrückt kann also das Objekt durch entsprechende Zuordnung eindeutig in dem Umgebungsmodell verortet und/oder positioniert werden.

Der Umgebungsbereich kann ebenfalls rein virtuell sein. Er kann also einen Bereich in dem Umfeld Modell entsprechen, zum Beispiel eine entsprechende Punkte- oder Koordinatenmenge umfassen. Er kann einem realen Umgebungsbereich eindeutig zuordenbar sein und/oder diesem entsprechen.

In an sich bekannter Weise kann auch eine Position des Kraftfahrzeugs in dem Umgebungsmodell ermittelt werden, beispielsweise anhand von Ortungssystemen, wie z.B. einem GPS-basierten Ortungssystem. Es ist ebenso bekannt, die Ausrichtung eines Sichtfelds einer Head-Up-Displayeinrichtung z.B. in einem Kraftfahrzeugkoordinatensystem zu ermitteln. Dabei kann es sich bei dem Sichtfeld allgemein um ein Feld, eine Fläche oder einen Bereich handeln, in der mit der Head-Up-Displayeinrichtung Objekte einblendbar sind und insbesondere dort hinein projizierbar sind. Die Position des Sichtfelds innerhalb des Kraftfahrzeugs kann beispielsweise anhand der Einbauposition der Head-Up-Displayeinrichtung in dem Kraftfahrzeug bestimmt werden und/oder auf Basis von Einstellungen insbesondere optischer Komponenten der Head-Up-Displayeinrichtung, sofern diese z.B. zum Variieren einer Eyebox durch den Fahrer variabel sind.

Aus einer bekannten Relativanordnung des Kraftfahrzeugs (und insbesondere von dessen Koordinatensystem) zur Umgebung (und insbesondere einem globalen Koordinatensystem eines Umgebungsmodells) kann dann auch die Lage des Sichtfelds innerhalb des Umgebungsmodells bestimmt werden und insbesondere, mit welchen Umgebungsbereichen sich dieses überlappt und/oder welche Umgebungsbereiche sich aktuell in dem Sichtfeld befinden (d.h. mit diesem überlappen, überdecken und/oder von dem Sichtfeld erfasst werden). Hierfür können z.B. auch aktuelle Fahrzeugparameter herangezogen werden, z.B. Federungseinstellungen, die eine Höhenposition der Fahrerkabine und/oder der Head-Up-Displayeinrichtung relativ zur Fahrbahn beeinflussen.

Auf diese Weise kann also erzielt werden, dass eine Lage des Umgebungsbereichs und/oder diesem zugeordneter Objekte im Umfeldmodell bekannt ist, wie auch die Lage eines Sichtfeldes und/oder der vom Sichtfeld aktuell erfassten Umgebungsbereiche. Dies ermöglicht das Überprüfen dahingehend, ob ein aktuell einzublendendes Objekts bzw. der diesem Objekt zugeordnete Umgebungsbereich sich in dem Sichtfeld befindet oder nicht.

Prinzipiell kann der Umgebungsbereich punktförmig sein. Er kann den Mittelpunkt eines z.B. einzurahmenden realen Objektes definieren und/oder als eine Art Ankerpunkt zum Einblenden von Hinweisen dienen. Das Objekt kann sich über einen entsprechend punktförmigen (aber auch einen zweidimensionalen) Umgebungsbereich hinaus erstrecken und beispielsweise eine größerer zweidimensionale Erstreckung aufweisen. Insofern wird bevorzugt überprüft, ob sich das Objekt, wenn dieses am Umgebungsbereich positioniert ist, mit seiner zweidimensionalen (oder auch dreidimensionalen) Erstreckung bevorzugt vollständig in dem Sichtfeld befindet oder nicht. Anders ausgedrückt wird also bevorzugt eine Erfassung eines am oder im Umgebungsbereich positionierten Objektes durch das Sichtfeld überprüft.

Um die Head-Up-Displayeinrichtung in der geschilderten Weise zu betreiben, kann diese allgemein eine Steuereinrichtung umfassen oder mit einer solchen verbunden sein. Die Steuereinrichtung kann wenigstens eine Prozessoreinrichtung und/oder wenigstens eine Speichereinrichtung umfassen. Auf der Speichereinrichtung können Programmanweisungen hinterlegt sein, die bei Ausführen durch die Prozessoreinrichtung die Steuereinrichtung dazu veranlassen, jegliche hierin erwähnten Schritte oder Maßnahmen auszuführen. Beispielsweise kann die Steuereinrichtung nach Eingeben einer gewünschten Fahrroute per Datenbankabfrage oder von einem externen Server eine Information bezüglich einer Zuordnung wenigstens eines virtuellen Objekts zu einem Umgebungsbereich erhalten. Alternativ kann sie diese Zuordnung auch selbst vornehmen. Anschließend kann die Steuereinrichtung die Lage eines Sichtfeldes der Head-Up-Displayeinrichtung z.B. in dem (globalen) Koordinatensystem eines Umgebungsmodells (auch als Umfeldmodell bezeichnet) ermitteln. Daraufhin kann das (vollständige) Abbilden des Objektes im Sichtfeld überprüft werden und kann darauf basierend der geeignete Anzeigemodus ausgewählt werden. Anschließend kann die Steuereinrichtung die Head-Up-Displayeinrichtung in an sich bekannter Weise zum Erzeugen gewünschter virtueller Einblendungen ansteuern.

Die virtuelle Einblendung in dem Ersatzanzeigemodus ist unterschiedlich von einer Einblendung des Objektes, die stattfinden würde, wenn dieses sich in einem Sichtfeld befinden würde. Die Einblendung erfolgt dann an einem fest vorgegebenen Ort oder einem festen Bereich innerhalb des Sichtfeldes und die Einblendung erfolgt unabhängig von Relativbewegungen des Sichtfeldes zu dem Umgebungsbereich bzw. Objekt, zumindest solange diese nicht in das Sichtfeld gelangen. Anders ausgedrückt erfolgt also die Einblendung im Ersatzanzeigemodus ortsfest innerhalb des Sichtfeldes, was im Normalanzeigemodus nicht der Fall ist. Dort wird die Position eines eigeblendeten Inhalts (insbesondere des entsprechenden Objektes) bei einer Relativbewegung von Sichtfeld und Umgebungsbereich ebenfalls variiert. Das Objekt bzw. dessen Darstellung ist in diesem Fall an den Umgebungsbereich gebunden bzw. kann in als in der Umgebung ortsfest betrachtet werden. Relativ zu bzw. innerhalb des Sichtfelds kann sie hingegen beweglich erfolgen. Für den Ersatzanzeigemodus gilt Gegenteiliges (fest im Sichtfeld, relativbeweglich zur Umgebung). Weiter können im Ersatzanzeigemodus Einblendungen mit konstanter Größe ohne Abstandsabhängigkeiten zu Umgebungsbereichen erfolgen. Im Normalanzeigemodus kann eine solche Abstandsabhängigkeit hingegen vorgesehen sein.

Weiter ist vorgesehen, dass im Normalanzeigemodus und dann, wenn eine lediglich temporäre Änderung einer Relativanordnung von Objekt und Sichtfeld erfolgt (insbesondere entlang einer Vertikalachse und/oder aufgrund einer Nickbewegung des Kraftfahrzeugs), bei der das Objekt das Sichtfeld lediglich temporär zumindest teilweise verlässt, auf einen Wechsel in den Ersatzanzeigemodus verzichtet wird. In Kenntnis davon, dass die entsprechende Änderung der Relativanordnung und somit auch das Herausbewegen des Objekts aus dem Sichtfeld lediglich temporär ist, kann zum Verhindern von Fahrerirritationen also auf einen Wechsel des Anzeigenmodus verzichtet werden.

Weiter ist vorgesehen, dass die lediglich temporäre Änderung der Relativanordnung (von Sichtfeld und Umgebung) auf Basis von Messwerten von wenigstens einem Beschleunigungssensor des Kraftfahrzeugs erfasst wird. Anders ausgedrückt wird also die Tatsache, dass es sich bei der Änderung dieser Relativanordnung um lediglich eine temporäre Änderung handelt, auf Basis von entsprechenden Messwerten ermittelt. Wenn die Messwerte des Beschleunigungssensors einen vorbestimmten Mindestwert überschreiten, kann darauf geschlossen werden, dass eine derart schlagartige Änderung aus dem temporären Überfahren eines Hindernisses resultiert. Zusätzlich können auch zeitliche Änderungen der Messwerte betrachtet werden, beispielsweise um Schwingungsmuster zu erkennen oder allgemeine Bewegungsmuster, die aus dem Überfahren von insbesondere vertikalen Hindernissen wie den genannten Schwellen oder Absenkungen resultieren können. Hierfür können geeignete Vergleichsverläufe oder -muster hinterlegt sein.

Eine bevorzugte Weiterbildung sieht vor, dass in dem Ersatzanzeigemodus die Einblendung unter Berücksichtigung einer Art und/oder eines Inhaltes des Objekts erzeugt wird. Insbesondere kann es sich bei der Einblendung um ein gleichartiges oder auch dasselbe Objekt handeln, wie es dem Umgebungsbereich zugeordnet ist. Optional kann es gegenüber diesem dem Umgebungsbereich zugeordneten Objekt lediglich in der Größe skaliert sein. Auch kann die Größe nicht abstandsabhängig variieren. Unter einer Art kann beispielsweise verstanden werden, ob das Objekt ein Warnhinweis, eine Verkehrsschild- und insbesondere Geschwindigkeitsbegrenzungsanzeige oder aber eine Navigationsanweisung ist. Auch innerhalb von Navigationsanweisungen und/oder Warnhinweisen können verschiedene Arten oder Klassen gebildet werden. Allgemein sieht diese Variante also vor, dass, obwohl das Objekt sich aktuell nicht in dem Sichtfeld befindet, in dem Ersatzanzeigemodus ein zumindest vergleichbares (z.B. inhaltsgleiches) oder aber auch identisches Objekt angezeigt wird.

Wie erwähnt, ist vorgesehen sein, dass in dem Ersatzanzeigemodus eine virtuelle Einblendung ortsfest innerhalb des Sichtfeldes und insbesondere an einer fest vorgegebenen Position oder in einem fest vorgegebenen Positionsbereich erfolgt. Beispielsweise kann es sich hierbei um ein aus Sicht des Fahrers (vertikal) oberen Rand des Sichtfeldes handeln oder aber auch um eine (vertikal) obere Kante hiervon. Eine Einblendung in diesen Bereich (unter Umständen unter zusätzlich gesonderter Farbgestaltung oder angepasster grafischer Darstellung) kann der Fahrer als eindeutigen Hinweis verstehen, dass das eingeblendete Objekt einem aktuell noch nicht vom Sichtfeld erfassten Umgebungsbereich zugeordnet ist. Insbesondere kann der Fahrer dies als ein Hinweis verstehen, dass es sich um ein vorausliegendes Objekt handelt bzw. einem vorausliegenden Umgebungsbereich, für den das Objekt Gültigkeit besitzt. Ebenso könnte auch eine Einblendung im unteren Randbereich oder an einer Unterkante des Sichtfelds erfolgen oder auch an einer anderen beliebigen definierten Position innerhalb des Sichtfeldes. Bevorzugt erfolgt die Einblendung mittig oder an einer horizontal konstanten Position.

Allgemein sieht eine Weiterbildung vor, dass in dem Ersatzanzeigemodus die Einblendung unter Berücksichtigung einer Relativanordnung von dem Objekt, das dem Umgebungsbereich zugeordnet ist, und dem Sichtfeld erzeugt wird. Die Relativanordnung kann in dem (globalen) Koordinatensystem eines Umfeldmodells ermittelt werden und/oder definiert sein. Beispielsweise kann auf diese Weise die Einblendung in der Nähe zu einer Kante oder einem Randbereich des Sichtfelds erfolgen, der oder die am nächsten zu dem entsprechenden Objekt (aus Sicht des Sichtfeldes) liegt.

Insbesondere kann in diesem Zusammenhang vorgesehen sein, dass als (oder auf Basis von der) Relativanordnung eine Richtung ermittelt wird, in der das Objekt relativ zu dem Sichtfeld versetzt ist. Die Richtung kann beispielsweise durch einen zweidimensionalen oder dreidimensionalen Vektor verkörpert werden. In dem Ersatzanzeigenmodus kann die Einblendung relativ zu einem Mittelpunkt des Sichtfeldes in der im Wesentlichen selben Richtung versetzt sein. Allgemein kann also die Einblendung analog zu oder unter Berücksichtigung der geschilderten Relativanordnung erfolgen.

Dies kann insbesondere den Fall betreffen, dass als Relativanordnung eine Position des Objekts oberhalb oder unterhalb oder links oder rechts von dem Sichtfeld ermittelt wird, was jeweils beispielhafte Richtungen der vorstehend genannten Art sind. Die Einblendung kann dann ebenfalls derart erfolgen, dass ein eingeblendeter Inhalt oberhalb, unterhalb, links oder rechts (jeweils aus Sicht des Fahrers) zu dem Mittelpunkt des Sichtfeldes versetzt ist.

Ein Vorteil ist, dass dann, wenn das dem Umgebungsbereich zugeordnete Objekt in das Sichtfeld gelangt und zu dem Normalanzeigemodus gewechselt wird, aus Sicht des Fahrers ein natürlicher Übergang innerhalb der Darstellung stattfindet. Beispielsweise kann dieser nicht sprunghaft und/oder allgemein nahtlos erfolgen. Dies wird vorliegend dadurch begünstigt, dass das im Ersatzanzeigemodus eingeblendete Objekt (oder allgemein die dort stattfindende Einblendung) bereits in Kenntnis einer Relativanordnung von Objekt und Umgebungsbereich erfolgt und bevorzugt an der dem Objekt nächstliegenden Kante oder dem entsprechenden Randbereich. Aus Sicht des Fahrers kann also zunächst ein Objekt im Ersatzanzeigemodus eingeblendet werden, dass dann, wenn sich das am Umgebungsbereich positionierte Objekt tatsächlich in das Sichtfeld bewegt, beginnt, sich entsprechend der Relativanordnung zu diesem Objekt zu verlagern und insbesondere beginnt, sukzessive in Richtung der Mitte des Sichtfeldes einzurücken. Statt von einem Sichtfeld kann auch von einem Sichtbereich gesprochen werden.

Wie erwähnt, sieht eine allgemein bevorzugte Variante vor, dass in dem Ersatzanzeigemodus die Einblendung in einem oder nahe eines Randbereichs des Sichtfelds erfolgt. Der Randbereich kann in Abhängigkeit der vorstehend erläuterten Relativanordnung von Objekt und Sichtfeld gewählt sein. Alternativ kann es sich um einen fest definierten Randbereich (insbesondere die obere oder untere Kante) handeln.

Eine Weiterbildung sieht vor, dass dann, wenn das (dem Umgebungsbereich zugeordnete) Objekt (z.B. bei einer insbesondere initialen Einblendung) eine Abmessung des Sichtfelds in einem vorbestimmten Mindestausmaß überdeckt (oder auch überspannt oder überlagert), dieses Objekt auch dann zumindest teilweise eingeblendet wird, wenn es sich nicht vollständig in dem Sichtfeld befindet. Anders ausgedrückt kann dann auf das Aktivieren des Ersatzanzeigemodus verzichtet werden. Alternativ kann dieser erst dann aktiviert werden, wenn sich das Objekt tatsächlich vollständig außerhalb des Sichtfeldes befindet. Das Objekt kann transparent sein, verdeckt das Sichtfeld also bevorzugt nicht blickdicht. Alternativ formuliert können das Objekt und das Sichtfeld jeweils eine Abmessung aufweisen, die sich entlang einer gemeinsamen Achse erstrecken (zum Beispiel entlang einer horizontalen Achse), und die Abmessung des Objekts kann einem vorbestimmten Mindestanteil der Abmessung des Sichtfeldes entsprechen.

Diese Variante sieht bevorzugt vor, in Abhängigkeit einer entsprechenden Mindestgröße des Objekts zumindest diejenigen Teile hiervon einzublenden, die sich aktuell mit dem Sichtfeld überlappen bzw. darin befinden. Hintergrund ist, dass das Objekt aufgrund seiner Größe dann ausreichend wahrnehmbar aus Fahrersicht sein kann und beispielsweise auch nur teilweise Einblendungen hiervon dem Fahrer eine eindeutige Information oder einen eindeutigen Hinweis vermitteln können. Unnötige und den Fahrer potentiell irritierende Wechsel der Anzeigemodi werden somit vermieden.

Bei der Abmessung des Sichtfelds kann es sich insbesondere um eine horizontale oder vertikale Abmessung handeln. Das Mindestausmaß kann z.B. wenigstens 50 % oder aber wenigstens 60 % der entsprechenden Abmessung betragen.

Diese Variante stellt eine Sonderbetriebsart des Normalanzeigemodus dar, da das Objekt in ortsbezogener Weise eingeblendet wird, auch wenn es nicht vollständig mit dem Sichtfeld überlappt. Es stellt aber auch eine bevorzugte Sonderbetriebsart des Ersatzanzeigemodus dar, da dieser bei Vorliegen eines entsprechenden Größenverhältnisses nicht aktiviert wird, obwohl sich das Objekt nicht vollständig in dem Sichtfeld befindet.

Zusätzlich kann vorgesehen sein, dass in dem Ersatzanzeigemodus und dann, wenn eine lediglich temporäre Änderung einer Relativanordnung von Sichtfeld und Umgebung erfolgt (wiederum z.B. entlang einer Vertikalachse und/oder aufgrund einer Nickbewegung des Kraftfahrzeugs), die Einblendung beweglich relativ zu dem Sichtfeld erfolgt. Beispielsweise kann in diesem Fall die Einblendung innerhalb eines Umgebungskoordinatensystems zumindest vorübergehend ortsfest verbleiben, beispielsweise entlang wenigstens zweier Koordinatenachsen. Dabei kann der Ort dem Ort der Einblendung in dem entsprechenden Koordinatensystem entsprechen, bevor die temporäre Änderung auftritt. Der eingeblendete Inhalt kann also beispielsweise losgelöst von dem Sichtfeld ortsfest in der Umgebung definiert sein, sodass sich das Sichtfeld relativ hierzu bewegt. Dies kann dazu führen, dass sich das Objekt auch zumindest teilweise aus dem Sichtfeld herausbewegt, dann aber bei Abklingen der beispielsweise Nickbewegung wieder seine ursprüngliche Position innerhalb des Sichtfeldes einnehmen kann. Spätestens wenn dies erfolgt ist, kann wieder das Objekt ortsfest innerhalb des Sichtfeldes bzw. dessen Koordinatensystem definiert sein und/oder nicht mehr ortsfest innerhalb der Umgebung oder eines globalen Koordinatensystems. Diese Anzeigevariante kann aus Sicht des Fahrers intuitiv sein, da sie die Relativbewegung (insbesondere ein stoß- oder ruckartiges Nicken) widerspiegelt bzw. aufnimmt.

Die Erfindung betrifft auch eine Head-Up-Displayeinrichtung für ein Kraftfahrzeug gemäß Anspruch 8.

In diesem Zusammenhang kann vorgesehen sein, dass die Head-Up-Displayeinrichtung das dem Umgebungsbereich (des Kraftfahrzeugs) zugeordnete virtuelle Objekt von einer externen Computereinrichtung, z.B. einem Server und/oder durch Auslesen einer Speichereinrichtung oder Datenbank und/oder durch eigenständige Ermittlung oder Festlegung einer solchen Zuordnung erhält.

Die Head-Up-Displayeinrichtung kann jegliche der vorstehend erläuterten Varianten oder Weiterbildungen umfassen, beispielsweise durch Umfassen einer vorstehend geschilderten Prozessor- und/oder Speichereinrichtung. Sie kann allgemein dazu eingerichtet sein, ein Verfahren gemäß jeglicher hierin geschilderter Varianten auszuführen. Sämtliche der vorstehenden Ausführung zu und Weiterbildungen von Verfahrensmerkmalen können auf die gleichlautenden Merkmale der Head-Up-Displayeinrichtung ebenso zutreffen bzw. bei dieser vorgesehen sein.

Ausführungsbeispiele der Erfindung werden im Folgenden anhand der nachstehenden schematischen Figuren erläutert.
- Fig. 1: zeigt ein Kraftfahrzeug umfassend eine Head-Up-Displayeinrichtung gemäß einem Ausführungsbeispiel, mit der ein Verfahren gemäß einem Ausführungsbeispiel ausgeführt wird, während sich das Kraftfahrzeug einer Kreuzung nähert.
- Fig. 1a: zeigt ein Ablaufschema des gemäß Fig. 1 ausgeführten Verfahrens.
- Fig. 2, Fig. 3: zeigen jeweils beispielhafte Ansichten, die mit dem Verfahren aus Fig. 1a erzeugbar sind.
- Fig. 4: zeigt eine Ansicht, die mit dem Verfahren aus Fig. 1a erzeugbar ist, wenn sich ein dem Umgebungsbereich zugeordnetes Objekt nur teilweise in einem Sichtfeld befindet.
- Fig. 5 - Fig. 7: zeigen Ansichten eines virtuellen Objekts in einem Sichtfeld in verschiedenen Betriebssituationen und bei Erfüllen eines definierten Größenkriteriums des Objekts relativ zum Sichtfeld.
- Fig. 8: zeigt eine schematische Ansicht eines Sichtfeldes analog zu den Figuren 2 bis 7, wenn das Fahrzeug eine temporäre Nickbewegung ausführt.

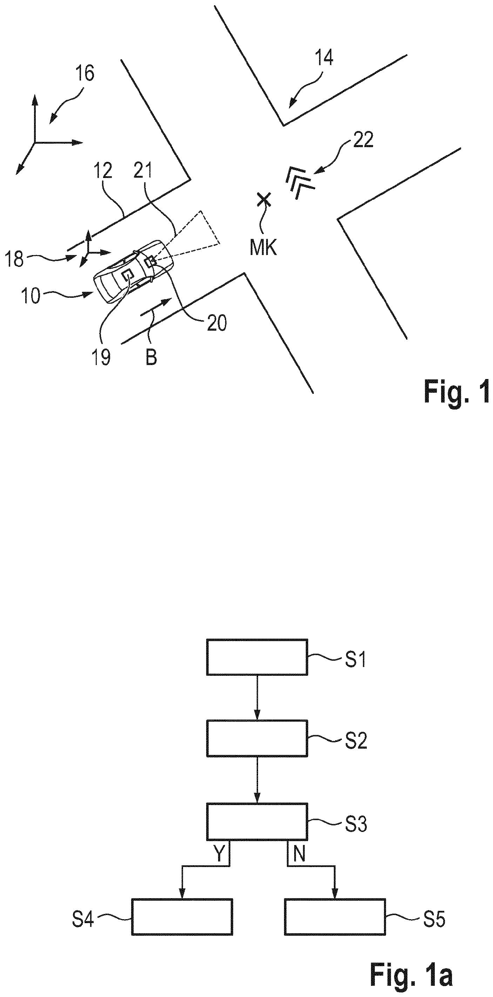

In Fig. 1 ist eine Fahrsituation eines Fahrzeugs 10 gezeigt, wenn dieses sich gemäß dem Bewegungspfeil B und entlang einer Fahrbahn 12 einer Kreuzung 14 annähert. Die Darstellung kann einer realen Fahrsituation entsprechen. Sie kann allerdings auch in einem Umfeldmodell entsprechend modelliert sein. Bevorzugt ist das Umfeldmodell jedoch abstrakt und definiert lediglich ausgewählte Eigenschaften der Umgebung in dem angedeuteten globalen (Umfeld-) Koordinatensystem 16.

In diesem globalen Koordinatensystem 16 kann insbesondere eine Position des Fahrzeugs 10 und bevorzugt eines fahrzeuggebundenen (Fahrzeug-)Koordinatensystems 18 bestimmt werden. In dem Fahrzeug-Koordinatensystem 18 definierte Koordinaten können in an sich bekannter Weise in globale Koordinaten in dem globalen Koordinatensystem 16 transformiert werden. Ein Beispiel von in dem Fahrzeug-Koordinatensystem 18 festgelegte Koordinaten sind die Koordinaten einer Head-Up-Displayeinrichtung 20 (im Folgenden auch HUD 20). Ebenso können in dem Fahrzeug-Koordinatensystem 18 Koordinaten eines Sichtfelds 21 bestimmt werden. Wie einleitend geschildert, kann dieses optional durch Verstellen der HUD 20 variabel positionierbar sein. Insbesondere kann hierdurch eine aus Sicht des Fahrzeugs 10 bzw. eines darin befindlichen Fahrzeugfahrers vertikale und horizontale Ausrichtung des Sichtfeldes 21 definiert werden. Die Begriffe vertikal und horizontal können sich dabei auf entsprechende vertikale und horizontale Raumrichtungen beziehen, wobei die Vertikalachse einer Achse entsprechen kann, entlang derer die Gravitationskraft wirkt. Die Horizontalachse kann orthogonal zu der Vertikalachse verlaufen. Eine optionale Tiefenachse kann entlang oder parallel zu einer Fahrzeuglängsachse verlaufen.

In dem globalen Koordinatensystem 16 ist beispielhaft ein Mittelpunkt MK der Kreuzung 14 definiert und sind genauer gesagt dessen Koordinaten definiert. Diesem Kreuzungsmittelpunkt MK wird vorliegend eine visuelle bzw. grafische Navigationsanweisung 22 zugeordnet (lediglich beispielhaft dargestellt als drei aufeinanderfolgende Pfeilspitzen, siehe auch nachstehende weitere Figuren). Diese Zuordnung bedeutet, dass die Position der Navigationsanweisung 22, die ein Beispiel eines einzublenden virtuellen Objektes ist, in dem globalen Koordinatensystem 16 festgelegt ist. Einblendungen dieser Navigationsanweisung 22 sollen aus Sicht des Fahrers und gemäß dem Funktionsprinzip bekannter Augmented-Reality-HUDs derart erfolgen, dass sie an dem Kreuzungsmittelpunkt MK liegen bzw. optisch mit diesem zusammenfallen. Hierfür kann z.B. eine Position des Kreuzungsmittelpunkts MK im Sichtfeld 21 ermittelt werden (beispielsweise durch Abgleich von deren globalen Koordinaten) und kann an der entsprechenden Position im Sichtfeld 21 und unter optional perspektivisch und/oder in der Größe angepasster Darstellung dann die Navigationsanweisung 22 eingeblendet werden.

Es können aber aufgrund der einleitend geschilderten Umstände Szenarien auftreten, bei denen der Navigationshinweis 22 trotz Zufahrt auf die Kreuzung 14 bei entsprechender virtueller Positionierung an dem Kreuzungsmittelpunkt MK nicht in das Sichtfeld 21 gelangt oder zumindest nicht vollständig damit überlappt. Hierfür sieht das vorgeschlagene Ausführungsbeispiel einen nachstehend geschilderten Ersatzanzeigemodus vor.

Anhand von Fig. 1a wird der allgemeine Betrieb der HUD 20 noch einmal gesondert geschildert. In einem Schritt S1 werden Informationen betreffend eine Zuordnung des einzublendenden Objektes in Form der Navigationsanweisung 22 zu einem Umgebungsbereich (vorliegend dem Kreuzungsmittelpunkt MK) erhalten. Alternativ kann im Schritt S1 diese Zuordnung aktiv durchgeführt werden, beispielsweise durch die HUD 20 bzw. eine nicht gesondert abgebildete Steuereinrichtung hiervon. Die Zuordnung umfasst, dass die Koordinaten des Navigationshinweises 22 in dem globalen Koordinatensystem 16 definiert sind bzw. erhalten werden.

In einem Schritt S2 wird bevorzugt fortlaufend und/oder wiederholt eine Lage des Sichtfeldes 21 in dem globalen Koordinatensystem 16 bestimmt. In einem Schritt S3 wird dann bevorzugt ebenso wiederholt und/oder zyklisch geprüft, ob das Sichtfeld 21 das an dem Umgebungsbereich MK positionierte Objekt bzw. den Navigationshinweis 22 abbildet und/oder enthält. Dies kann durch Abgleichen der Koordinaten des Sichtfeldes 21 und des Navigationshinweises 22 in dem globalen Koordinatensystem 16 erfolgen. Dabei ist zu berücksichtigen, dass sowohl das Sichtfeld 21 als auch der Navigationshinweis 22 zweidimensional sein können und entsprechend eine zweidimensionale Menge oder zweidimensional verteilte Koordinaten in dem globalen Koordinatensystem 16 umfassen bzw. solchen zugeordnet sein können. Sind beispielsweise die Koordinaten des Navigationshinweises 22 vollständig in denen des Sichtfelds 21 enthalten, ist der Navigationshinweis 22 vollständig in dem Sichtfeld 21 durch eine entsprechende Einblendung abbildbar.

Wurde in dem Schritt S3 festgestellt, dass der Navigationshinweis 22 in dem Sichtfeld 21 vollständig enthalten ist (Pfeil Y in Fig. 1a), wird in einem Schritt S4 ein Normalanzeigemodus aktiviert. Dann wird die HUD 20 wie herkömmlich und gemäß bereits am Markt erhältliche Augmented-Reality-HUDs betrieben und wird der Navigationshinweis 22 aus Sicht des Fahrers an der mit dem Kreuzungsmittelpunkt MK übereinstimmenden Position im Sichtfeld 21 eingeblendet.

Wird hingegen im Schritt S3 ermittelt, dass der Navigationshinweis 22 (bei Positionierung am bzw. Zuordnung zu dem Kreuzungsmittelpunkt MK) nicht von dem Sichtfeld 21 vollständig erfasst ist, wird in einem Schritt S5 ein Ersatzanzeigemodus aktiviert. Dann erfolgt eine gegenüber dem Normalanzeigemodus aus Schritt S4 veränderte Einblendung eines für den Fahrer sichtbaren visuellen Inhalts (wird also eine von dem Normalanzeigemodus abweichende Einblendung erzeugt). Beispiele hierfür werden nachstehend noch genannt. Es versteht sich, dass dann, wenn einer der Anzeigemodi in Schritt S4 und S5 festgelegt wurde, bevorzugt regelmäßig überprüft wird, ob die Festlegung noch Gültigkeit besitzt. Es kann also beispielsweise regelmäßig zu dem Schritt S3 zurückgekehrt werden (z.B. nach Ablauf einer vorbestimmten Zeitspanne) und kann überprüft werden, ob die getroffene Festlegung noch gilt. Auf diese Weise kann auch automatisch in einen aktuell angemessenen Anzeigemodus gewechselt werden.

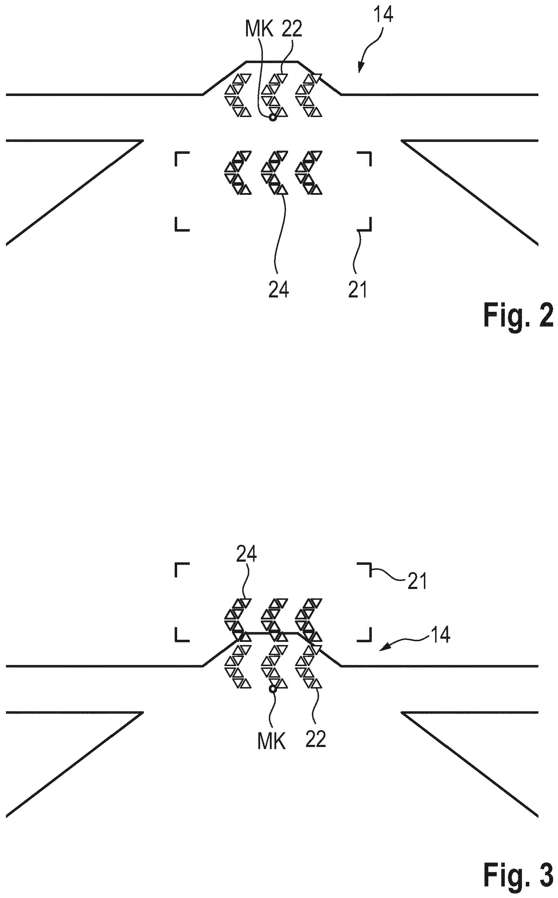

Anhand der Figuren 2 bis 4 werden im Folgenden beispielhafte Einblendungen in das Sichtfeld 21 im Ersatzanzeigemodus geschildert. Die Ansichten entsprechen dabei jeweils einer Sicht des Fahrers durch z.B. die Windschutzscheibe des Fahrzeugs 10, wenn dieser auf die Kreuzung 14 aus Fig. 1 zufährt. In dieser Ansicht ist auch jeweils ein Sichtfeld 21 der HUD 20 enthalten, in das virtuelle Einblendungen möglich sind.

In Fig. 2 erkennt man zunächst wiederum die Kreuzung 14 sowie den Kreuzungsmittelpunkt MK. Ferner ist dort das vom Fahrer nicht sichtbare und lediglich aus Darstellungsgründen eingetragene Objekt bzw. der Navigationshinweis 22 gezeigt. Ferner erkennt man das Sichtfeld 21, das allgemein zweidimensional ist. Man erkennt, dass der Navigationshinweis 22 an seiner eigentlichen dem Kreuzungsmittelpunkt MK zugeordneten Position im globalen Koordinatensystem 16 (siehe Fig. 1) nicht im Sichtfeld 21 liegt. Stattdessen liegt er z.B. aus Sicht des Fahrzeugkoordinatensystems 18 oberhalb des Sichtfelds 21. Optional wird diese Relativanordnung in einem gesonderten Verfahrensschritt (z.B. innerhalb des Ersatzanzeigemodus) ermittelt, also beispielsweise dass das Objekt in seinem dem Umgebungsbereich zugeordneten Zustand oberhalb oder (wie nachstehend in Fig. 3) unterhalb des Sichtfelds 21 liegt. Entsprechend erfolgt dann auch eine Einblendung eines Objekts 24 (im Folgenden Ersatzobjekt 24) im Sichtfeld 21 in Abhängigkeit dieser Relativanordnung. In dem gezeigten Beispiel äußert sich dies in der Form, dass das Ersatzobjekt 24 am oberen Rand bzw. an der Oberkante des Sichtfelds 21 eingeblendet wird. Anders ausgedrückt wird also das Ersatzobjekt 24 außermittig eingeblendet. Gegenüber einer nicht gesondert eingetragenen Mitte des Sichtfeldes 21 ist es dabei nach vertikal oben versetzt, da auch das am Umgebungsbereich MK positionierte eigentlich einzublendende virtuelle Objekt 22 oberhalb des Sichtfeldes 21 positioniert ist.

Lediglich beispielhaft handelt es sich in den hierin gezeigten Fällen bei dem eingeblendeten Ersatzobjekt 24 um ein art- und inhaltsgleiches Objekt wie das eigentlich einzublendende Objekt bzw. der eigentlich einzublendende Navigationshinweis 22.

In Fig. 3 ist der Fall gezeigt, dass das Sichtfeld 21 (z.B. aufgrund einer gewählten Fahrereinstellung) oberhalb des Kreuzungsmittelpunktes MK und insbesondere des dort positionierten Navigationshinweises 22 liegt. Entsprechend wird in Kenntnis dieser optional gesondert ermittelten Relativanordnung das Ersatzobjekt 24 am unteren Rand des Sichtfeldes 21 positioniert.

Allgemein kann sich die optionale Ermittlung der Relativanordnung auf das Ermitteln einer vertikalen Relativanordnung beschränken, also darauf, ob das Sichtfeld 21 zumindest teilweise oberhalb oder unterhalb von dem Navigationshinweis 22 positioniert ist, wenn Letzterer am Umgebungsbereich bzw. Kreuzungsmittelpunkt MK positioniert ist.

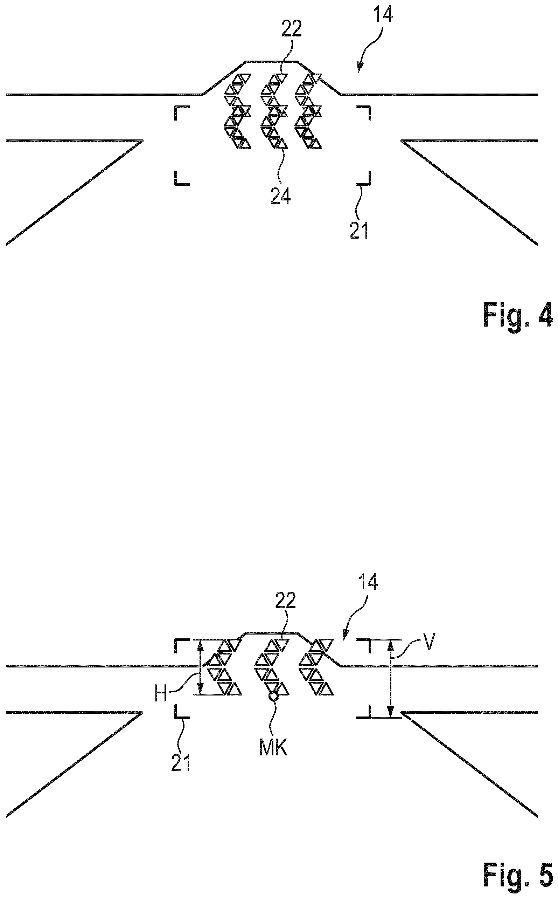

In Fig. 4 ist der Fall gezeigt, dass das Sichtfeld 21 den Navigationshinweis 22 zumindest teilweise enthält (wenn dieser am Kreuzungsmittelpunkt MK positioniert ist, hier verdeckt).

Gezeigt ist, dass der Navigationshinweis 22 größtenteils weiterhin oberhalb von dem Sichtfeld 21 positioniert ist, aber der untere Teil von dessen drei Pfeilspitzen in das Sichtfeld 21 hineinragt. Bevorzugt ist auch in diesem Fall vorgesehen, das Ersatzobjekt 24 entsprechend der Relativanordnung einzublenden (also hier am oberen Rand des Sichtfeldes 21) und keine Bestandteile des eigentlich einzublendenden Navigationshinweises 22 an dessen vorgesehener Position (dem Kreuzungsmittelpunkt MK) einzublenden. Stattdessen kann Letzteres erst dann erfolgen, wenn das Sichtfeld 21, z.B. aufgrund einer weiteren Fahrt auf den Kreuzungsmittelpunkt MK zu, gegenüber dem abgebildeten Navigationshinweis 22 weiter vertikal nach oben bewegt wird. Anders ausgedrückt wird das Sichtfeld 21 bei einer weiteren Fahrt in Richtung der Kreuzung 14 zunehmend mit dem Navigationshinweis 22 überlappen bzw. wird Letzterer zunehmend in das Sichtfeld 21 nach vertikal unten hineinwandern. Sobald er vollständig in das Sichtfeld 21 gelangt ist, kann dann zu dem Normalanzeigemodus gewechselt werden. Die dann aber initial erzeugte Einblendung bzw. Ansicht wird derjenigen aus Fig. 4 entsprechen, d.h. mit dem Navigationshinweis 22 am oberen Rand des Sichtfeldes 21 zusammenfallen. Aus Sicht des Fahrers resultiert dies in einem nahtlosen und für ihn bevorzugt visuell nicht wahrnehmbaren Übergang zwischen den einzelnen Anzeigemodi.

In Fig. 5 ist zunächst ein Szenario gezeigt, bei dem ein Navigationshinweis 22 an dessen tatsächlich vorgesehener Position (dem Kreuzungsmittelpunkt MK) im Sichtfeld 21 vollständig eingeblendet wird. Das Beispiel entspricht einem Normalanzeigemodus, bei dem der Navigationshinweis 22 vollständig in dem Sichtfeld 21 enthalten ist.

Gezeigt ist dabei zusätzlich der Fall, dass der Navigationshinweis 22 wenigstens eine vorbestimmte Abmessung V des Sichtfeldes 21 in einem definierten Mindestausmaß abdeckt bzw. sich in einem definierten Mindestausmaß entlang dieser Abmessung erstreckt. Dies betrifft im vorliegenden Fall beispielhaft eine vertikale Abmessung des Sichtfeldes 21. Eine entsprechende vertikale Höhe H des Navigationshinweises 22 kann beispielsweise wenigstens 50 %, bevorzugt wenigstens 60 % der entsprechenden vertikalen Abmessung V des Sichtfeldes 21 einnehmen.

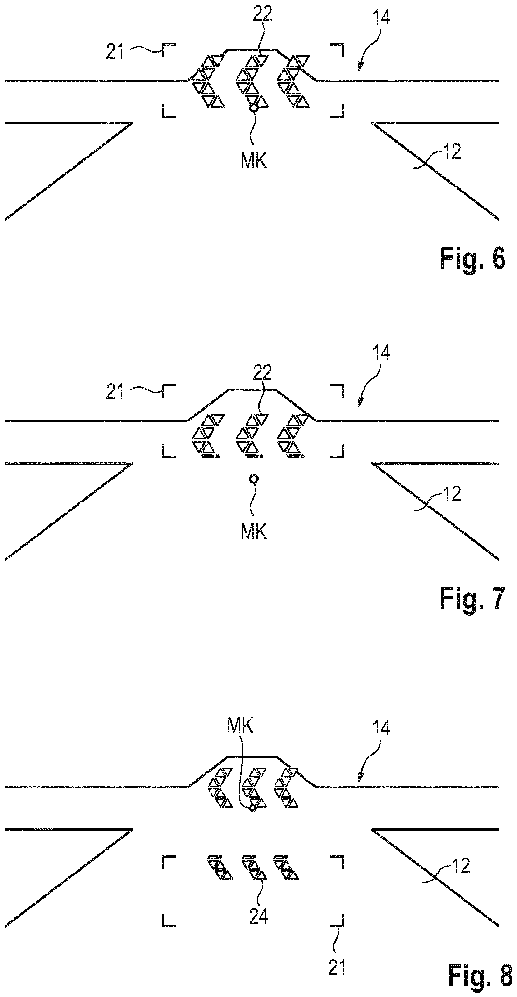

Fährt der Fahrer ausgehend von Fig. 5 weiter auf die Kreuzung 14 zu, wird das dann der Umgebung ortsfest zugeordnete Objekt bzw. der Navigationshinweis 22 aus Sicht des Fahrers weiter ortsfest verbleiben, also an dem Kreuzungsmittelpunkt MK. In der Folge wird sich der Navigationshinweis, wie aus Fig. 6 ersichtlich, zunehmend in Richtung eines unteren Randbereichs des Sichtfeldes 21 verlagern. Aufgrund des geschilderten Größenverhältnisses des Navigationshinweises 22 relativ zum Sichtfeld 21 ist es bei einer noch weiteren Fahrt in Richtung der Kreuzung 14 und einer entsprechenden Bewegung des Navigationshinweises 22 aus dem Sichtfeld 21 nach vertikal unten hinaus aber nicht zwingend erforderlich, unmittelbar in den Ersatzanzeigemodus zu wechseln. Optional kann dies erst dann erfolgen, wenn der Navigationshinweis 22 vollständig außerhalb des Sichtfeldes liegt.

Stattdessen können diejenigen Bestandteile des Navigationshinweises 22, die nach wie vor mit dem Sichtfeld 21 überlappen bzw. hiervon erfasst werden, nach wie vor in dem Sichtfeld 21 gezeigt werden. Der Navigationshinweis 22 wird also sozusagen abgeschnitten dargestellt, da über das Sichtfeld 21 hinausragende Bestandteile nicht gesondert eingeblendet werden. Dieser Zustand ist in Fig. 7 gezeigt. Aufgrund der geschilderten Größenverhältnisse ist der Navigationshinweis 22 auch in diesem Zustand noch vom Fahrer eindeutig erfassbar.

Das Szenario von Fig. 7 kann ebenso auftreten, wenn ausgehend von Fig. 6 eine vorstehend geschilderte Nickbewegung des Fahrzeugs 10 relativ zur Fahrbahn beim Überfahren einer Schwelle oder Vertiefung (also eines vertikalen Hindernisses) auftritt. Derartige Nickbewegungen treten bekanntermaßen schlagartig auf und meist in Form von rasch abklingenden Schwingungen. Das Sichtfeld 21 wippt dann mit gedämpfter Amplitude relativ zur Fahrbahn 12 auf und ab, wird also relativ zu dieser vertikal auf und ab bewegt. Ausgehend von Fig. 6 und dem dort noch vorliegenden Normalanzeigemodus wird, insbesondere wenn das geschilderte Größenverhältnis erfüllt ist, bevorzugt aber auch unabhängig hiervon, aufgrund der lediglich temporären Relativbewegung des Sichtfelds 21 zur Fahrbahn 12 und somit auch zum Kreuzungsmittelpunkt MK nicht unmittelbar zum Ersatzanzeigemodus gewechselt. Stattdessen können dann auch bei Navigationshinweisen 22, die das geschilderte Größenverhältnis nicht erfüllen, zumindest teilweise abgeschnittene Ansichten gemäß Fig. 7 erzeugt werden, wenn das Sichtfeld 21 z.B. ausgehend von Fig. 6 sprunghaft vertikal nach oben bewegt wird (siehe entsprechender Zustand aus Fig. 7). Das Erkennen des temporären Charakters einer entsprechenden Relativbewegung von Sichtfeld 21 zur Umgebung und insbesondere zum Kreuzungsmittelpunkt MK kann über Beschleunigungssensoren 19 (siehe Fig. 1) von insbesondere einem Feder-Dämpfer-System des Fahrzeugs 10 erfolgen.

In Fig. 8 ist eine Anzeige gezeigt, die bei aktiviertem Ersatzanzeigemodus und dem Auftreten einer vorstehend geschilderten temporären Relativbewegung von Sichtfeld zur Umgebung, insbesondere aufgrund einer Nickbewegung des Fahrzeugs 10, auftreten kann. In diesem Fall kann das Ausgangsszenario z.B. bei ebener Fahrbahn 12 demjenigen von Fig. 2 entsprechend. Ausgehend hiervon kann z.B. beim Einfahren in eine Vertiefung das Sichtfeld 21 gegenüber der Umgebung und insbesondere dem Kreuzungsmittelpunkt MK vertikal nach unten rutschen.

Aufgrund der erkannten lediglich temporären Art dieser Relativbewegung wird das Ersatzanzeigeelement 24 zum Vermeiden von Fahrerirritationen dann aber nicht gemeinsam mit dem Sichtfeld 21 nach unten bewegt. Es verbleibt also nicht ortsfest innerhalb des Sichtfeldes 21 (beispielsweise ortsfest relativ zu einem nicht gesondert dargestellten Mittelpunkt des Sichtfeldes 21). Stattdessen verbleibt es bevorzugt ortsfest relativ zur Umgebung und/oder zum betrachteten Kreuzungsmittelpunkt MK. Ferner wird dann bevorzugt nur der derjenige Teil des Ersatzanzeigeelements 24 dargestellt, der noch mit dem Sichtfeld 21 überlappt. Dies betrifft in diesem Fall den unteren Teil der jeweiligen drei Pfeilspitzen (beispielsweise wiederum im Vergleich zur Darstellung aus Fig. 2).

Wenn ausgehend von dem Szenario aus Fig. 8 das Sichtfeld 21 aufgrund des sich wieder aufrichtenden Fahrzeugs 10 wieder nach oben bewegt wird, kann das Ersatzanzeigeelement 24 optisch wieder vertikal nach unten in das Sichtfeld 21 hineinbewegt werden. Spätestens bei dessen vollständiger Abbildung in dem Sichtfeld 21 und/oder abgeklungener Nickbewegung oder Wiedereinnahme der vormaligen Relativanordnung von Sichtfeld 21 und Umgebung, kann das Ersatzobjekt 24 wieder ortsfest innerhalb des Sichtfelds 21 positioniert sein. Es weist dann bevorzugt keinen feststehenden Bezug mehr zu dem Kreuzungsmittelpunkt MK auf, ist also relativbeweglich hierzu.

### Bezugszeichenliste

- 10: Fahrzeug
- 12: Fahrbahn
- 14: Kreuzung
- 16: globales (Umfeld-)Koordinatensystem
- 18: Fahrzeug-Koordinatensystem
- 19: Beschleunigungssensor
- 20: Head-Up-Displayeinrichtung (HUD)
- 21: Sichtfeld
- 22: einzublendendes virtuelles Objekt (Navigationshinweis)
- 24: virtuelle Einblendung im Ersatzanzeigemodus (Ersatzobjekt)
- MK: Umgebungsbereich (Kreuzungsmittelpunkt)
- B: Bewegungsrichtung des Fahrzeugs
- H: vertikale Höhe des einzublendenden Objekts
- V: vertikale Abmessung des Sichtfelds

## Patentansprüche

1. Verfahren zum Betreiben einer Head-Up-Displayeinrichtung (20) für ein Kraftfahrzeug (10), mit:
- Erhalten einer Zuordnung von wenigstens einem einblendbaren virtuellen Objekt (22) zu einem Umgebungsbereich (MK);
- Betreiben der Head-Up-Displayeinrichtung (20) in einem Normalanzeigemodus, wenn sich das dem Umgebungsbereich (MK) zugeordnete Objekt (22) in einem Sichtfeld (21) der Head-Up-Displayeinrichtung (20) befindet, wobei die Einblendung des Objekts kontaktanalog erfolgt, sodass das Objekt (22) dem zugeordneten Umgebungsbereich (MK) aus Sicht des Fahrers des Kraftfahrzeugs (10) ortsfest überlagert wird;
- Betreiben der Head-Up-Displayeinrichtung (20) in einem Ersatzanzeigemodus, wenn sich das dem Umgebungsbereich (MK) zugeordnete Objekt (22) nicht oder zumindest nicht vollständig in dem Sichtfeld (21) der Head-Up-Displayeinrichtung (20) befindet, wobei in dem Ersatzanzeigemodus eine innerhalb des Sichtfeldes (21) ortsfeste Einblendung eines das virtuelle Objekt (22) ersetzenden Ersatzobjektes (24) erzeugt wird,
**dadurch gekennzeichnet, dass**
im Normalanzeigemodus und dann, wenn eine lediglich temporäre Änderung einer Relativanordnung von Sichtfeld (21) und Umgebung erfolgt, bei der das Objekt (22) das Sichtfeld (21) lediglich temporär zumindest teilweise verlässt, auf einen Wechsel in den Ersatzanzeigemodus verzichtet wird, wobei die lediglich temporäre Änderung der Relativanordnung auf Basis von Messwerten von wenigstens einem Beschleunigungssensor (19) des Kraftfahrzeugs (10) erfasst wird, wobei auf eine lediglich temporäre Änderung der Relativanordnung von Sichtfeld und Umgebung geschlossen wird, wenn die Messwerte des Beschleunigungssensors (19) einen vorbestimmten Mindestwert überschreiten.

2. Verfahren nach Anspruch 1,
**dadurch gekennzeichnet, dass** in dem Ersatzanzeigemodus die Einblendung (24) unter Berücksichtigung einer Art und/oder eines Inhalts des Objekts (22) erzeugt wird.

3. Verfahren nach Anspruch 1 oder 2,
**dadurch gekennzeichnet, dass** in dem Ersatzanzeigemodus die Einblendung (24) unter Berücksichtigung einer Relativanordnung von dem Objekt (22), das dem Umgebungsbereich (MK) zugeordnet ist, und dem Sichtfeld (21) erzeugt wird.

4. Verfahren nach Anspruch 3,
**dadurch gekennzeichnet, dass** in dem Ersatzanzeigemodus die Einblendung (24) relativ zu einem Mittelpunkt des Sichtfelds (21) analog zu der Relativanordnung des Objekts (22) zu dem Sichtfeld (21) versetzt ist.

5. Verfahren nach einem der vorangehenden Ansprüche,
**dadurch gekennzeichnet, dass** in dem Ersatzanzeigemodus die Einblendung (24) in einem oder nahe eines Randbereichs des Sichtfeldes (21) erzeugt wird.

6. Verfahren nach einem der vorangehenden Ansprüche,
**dadurch gekennzeichnet, dass** dann, wenn das Objekt (22) eine Abmessung (V) des Sichtfelds (21) in einem vorbestimmten Mindestausmaß überlagert, dieses Objekt (22) auch dann zumindest teilweise eingeblendet wird, wenn es sich nicht vollständig in dem Sichtfeld (21) befindet.

7. Verfahren nach einem der vorangehenden Ansprüche,
**dadurch gekennzeichnet, dass** in dem Ersatzanzeigemodus und dann, wenn eine lediglich temporäre Änderung einer Relativanordnung von Sichtfeld (21) und Umgebung erfolgt, die Einblendung (24) beweglich relativ zu dem Sichtfeld (21) erfolgt.

8. Head-Up-Displayeinrichtung (20) für ein Kraftfahrzeug (10),
die dazu eingerichtet ist, wenigstens ein einem Umgebungsbereich (MK) zugeordnetes virtuelles Objekt (22) zu erhalten, und
die in einem Normalanzeigemodus betrieben wird, wenn sich das dem Umgebungsbereich (MK) zugeordnete Objekt (22) in einem Sichtfeld (21) der Head-Up-Displayeinrichtung (20) befindet, wobei die Einblendung des Objekts kontaktanalog erfolgt, sodass das Objekt (22) dem zugeordneten Umgebungsbereich (MK) aus Sicht eines Fahrers des Kraftfahrzeugs (10) ortsfest überlagert wird;
und die in einem Ersatzanzeigemodus betrieben wird, wenn sich das dem Umgebungsbereich (MK) zugeordnete Objekt (22) nicht oder zumindest nicht vollständig in einem Sichtfeld (21) der Head-Up-Displayeinrichtung (20) befindet, wobei in dem Ersatzanzeigemodus eine innerhalb des Sichtfeldes (21) ortsfeste Einblendung eines das virtuelle Objekt (22) ersetzenden Ersatzobjektes (24) erzeugt wird,
**dadurch gekennzeichnet, dass**
die Head-Up-Displayeinrichtung (20) derart ausgebildet ist, dass im Normalanzeigemodus und dann, wenn eine lediglich temporäre Änderung einer Relativanordnung von Sichtfeld (21) und Umgebung erfolgt, bei der das Objekt (22) das Sichtfeld (21) lediglich temporär zumindest teilweise verlässt, auf einen Wechsel in den Ersatzanzeigemodus verzichtet wird, wobei die Head-Up-Displayeinrichtung (20) weiter derart ausgebildet ist, dass die lediglich temporäre Änderung der Relativanordnung auf Basis von Messwerten von wenigstens einem Beschleunigungssensor (19) des Kraftfahrzeugs (10) erfasst wird, wobei auf eine lediglich temporäre Änderung der Relativanordnung von Sichtfeld und Umgebung geschlossen wird, wenn die Messwerte des Beschleunigungssensors (19) einen vorbestimmten Mindestwert überschreiten.

## Claims

1. Method for operating a head-up display device (20) for a motor vehicle (10), comprising:
- receiving an assignment of at least one displayable virtual object (22) to a surrounding area (MK);
- operating the head-up display device (20) in a normal display mode when the object (22) assigned to the surrounding area (MK) is in a field of view (21) of the head-up display device (20), wherein the object is displayed in a contact-analogue manner, with the result that the object (22) is superimposed in a fixed position on the assigned surrounding area (MK) from the point of view of the driver of the motor vehicle (10);
- operating the head-up display device (20) in a substitute display mode when the object (22) assigned to the surrounding area (MK) is not or at least not completely in the field of view (21) of the head-up display device (20), wherein, in the substitute display mode, a substitute object (24) replacing the virtual object (22) is displayed in a fixed position within the field of view (21),
**characterized in that**
in the normal display mode and when there is a merely temporary change in a relative arrangement of the field of view (21) and environment, in the case of which the object (22) at least partially leaves the field of view (21) only temporarily, a change into the substitute display mode is dispensed with, wherein the merely temporary change in the relative arrangement is detected on the basis of measured values from at least one acceleration sensor (19) of the motor vehicle (10), wherein a merely temporary change in the relative arrangement of the field of view and environment is inferred when the measured values from the acceleration sensor (19) exceed a predetermined minimum value.

2. Method according to Claim 1,
**characterized in that**, in the substitute display mode, the display (24) is generated taking into account a type and/or content of the object (22).

3. Method according to Claim 1 or 2,
**characterized in that**, in the substitute display mode, the display (24) is generated taking into account a relative arrangement of the object (22), which is assigned to the surrounding area (MK), and the field of view (21).

4. Method according to Claim 3,
**characterized in that**, in the substitute display mode, the display (24) is offset relative to a centre of the field of view (21) analogously to the relative arrangement of the object (22) with respect to the field of view (21).

5. Method according to one of the preceding claims,
**characterized in that**, in the substitute display mode, the display (24) is generated in or near an edge region of the field of view (21).

6. Method according to one of the preceding claims,
**characterized in that**, when the object (22) is superimposed on a dimension (V) of the field of view (21) to a predetermined minimum extent, this object (22) is at least partially displayed even if it is not completely in the field of view (21).

7. Method according to one of the preceding claims,
**characterized in that**, in the substitute display mode and when there is a merely temporary change in a relative arrangement of the field of view (21) and environment, the display (24) is moveable relative to the field of view (21) .

8. Head-up display device (20) for a motor vehicle (10),
which is configured to receive at least one virtual object (22) assigned to a surrounding area (MK), and which is operated in a normal display mode when the object (22) assigned to the surrounding area (MK) is in a field of view (21) of the head-up display device (20), wherein the object is displayed in a contact-analogue manner, with the result that the object (22) is superimposed in a fixed position on the assigned surrounding area (MK) from the point of view of the driver of the motor vehicle (10) ;
and which is operated in a substitute display mode when the object (22) assigned to the surrounding area (MK) is not or at least not completely in a field of view (21) of the head-up display device (20), wherein, in the substitute display mode, a substitute object (24) replacing the virtual object (22) is displayed in a fixed position within the field of view (21),
**characterized in that**
the head-up display device (20) is designed such that, in the normal display mode and when there is a merely temporary change in a relative arrangement of the field of view (21) and environment, in the case of which the object (22) at least partially leaves the field of view (21) only temporarily, a change into the substitute display mode is dispensed with, wherein the head-up display device (20) is also designed such that the merely temporary change in the relative arrangement is detected on the basis of measured values from at least one acceleration sensor (19) of the motor vehicle (10), wherein a merely temporary change in the relative arrangement of the field of view and environment is inferred when the measured values from the acceleration sensor (19) exceed a predetermined minimum value.

## Revendications

1. Procédé permettant de faire fonctionner un dispositif d'affichage tête haute (20) pour un véhicule automobile (10), comprenant les étapes consistant à :
- obtenir une attribution d'au moins un objet virtuel (22) superposable à une zone environnante (MK) ;
- faire fonctionner le dispositif d'affichage tête haute (20) dans un mode d'affichage normal lorsque l'objet (22) attribué à la zone environnante (MK) se trouve dans un champ de vision (21) du dispositif d'affichage tête haute (20), dans lequel la superposition de l'objet est effectuée par contact analogique de sorte que l'objet (22), vu par le conducteur du véhicule automobile (10), est superposé de manière fixe à la zone environnante (MK) ;
- faire fonctionner le dispositif d'affichage tête haute (20) dans un mode d'affichage de remplacement lorsque l'objet (22) attribué à la zone environnante (MK) ne se trouve pas ou du moins pas complètement dans le champ de vision (21) du dispositif d'affichage tête haute (20), dans lequel, dans le mode d'affichage de remplacement, une superposition fixe à l'intérieur du champ de vision (21) d'un objet de remplacement (24) remplaçant l'objet virtuel (22) est générée,
**caractérisé en ce que**
dans le mode d'affichage normal et lorsqu'une modification seulement temporaire d'un agencement relatif du champ de vision (21) et de l'environnement a lieu, dans laquelle l'objet (22) quitte au moins partiellement et seulement temporairement le champ de vision (21), un passage au mode d'affichage de remplacement est omis, dans lequel le changement seulement temporaire de l'agencement relatif est détecté sur la base de valeurs de mesure par au moins un capteur d'accélération (19) du véhicule automobile (10), dans lequel on conclut à une modification seulement temporaire de l'agencement relatif du champ de vision et de l'environnement si les valeurs de mesure du capteur d'accélération (19) dépassent une valeur minimale prédéterminée.

2. Procédé selon la revendication 1,
**caractérisé en ce que** dans le mode d'affichage de remplacement, la superposition (24) est générée en tenant compte d'un type et/ou d'un contenu de l'objet (22).

3. Procédé selon la revendication 1 ou 2,
**caractérisé en ce que** dans le mode d'affichage de remplacement, la superposition (24) est générée en tenant compte d'un agencement relatif de l'objet (22) qui est attribué à la zone environnante (MK) et le champ de vision (21).

4. Procédé selon la revendication 3,
**caractérisé en ce que** dans le mode d'affichage de remplacement, la superposition (24) est décalée par rapport à un centre du champ de vision (21) de manière analogue à l'agencement relatif de l'objet (22) par rapport au champ de vision (21).

5. Procédé selon l'une quelconque des revendications précédentes,
**caractérisé en ce que** dans le mode d'affichage de remplacement, la superposition (24) est générée dans une ou près d'une zone marginale du champ de vision (21).

6. Procédé selon l'une quelconque des revendications précédentes,
**caractérisé en ce que** lorsque l'objet (22) chevauche une dimension (V) du champ de vision (21) dans une mesure minimale prédéterminée, cet objet (22) est alors superposé au moins partiellement lorsqu'il ne se trouve pas complètement dans le champ de vision (21).

7. Procédé selon l'une quelconque des revendications précédentes,
**caractérisé en ce que** dans le mode d'affichage de remplacement, et lorsqu'une modification seulement temporaire d'un agencement relatif du champ de vision (21) et de l'environnement a lieu, la superposition (24) est effectuée de manière mobile par rapport au champ de vision (21).

8. Dispositif d'affichage tête haute (20) pour un véhicule automobile (10),
qui est conçu pour obtenir au moins un objet virtuel (22) attribué à une zone environnante (MK), et
qui fonctionne dans un mode d'affichage normal lorsque l'objet (22) attribué à la zone environnante (MK) se trouve dans un champ de vision (21) du dispositif d'affichage tête haute (20), dans lequel la superposition de l'objet est effectuée par contact analogique de sorte que l'objet (22), vu par un conducteur du véhicule automobile (10), est superposé de manière fixe à la zone environnante (MK) ;
et qui fonctionne dans un mode d'affichage de remplacement lorsque l'objet (22) attribué à la zone environnante (MK) ne se trouve pas ou du moins pas complètement dans un champ de vision (21) du dispositif d'affichage tête haute (20), dans lequel, dans le mode d'affichage de remplacement, une superposition fixe à l'intérieur du champ de vision (21) d'un objet de remplacement (24) remplaçant l'objet virtuel (22) est générée,
**caractérisé en ce que**
le dispositif d'affichage tête haute (20) est réalisé de telle sorte que dans le mode d'affichage normal et lorsqu'une modification seulement temporaire d'un agencement relatif du champ de vision (21) et de l'environnement a lieu, dans laquelle l'objet (22) quitte au moins partiellement et seulement temporairement le champ de vision (21), un passage au mode d'affichage de remplacement est omis, le dispositif d'affichage tête haute (20) est en outre réalisé de telle sorte que le changement seulement temporaire de l'agencement relatif est détecté sur la base de valeurs de mesure par au moins un capteur d'accélération (19) du véhicule automobile (10), dans lequel on conclut à une modification seulement temporaire de l'agencement relatif du champ de vision et de l'environnement si les valeurs de mesure du capteur d'accélération (19) dépassent une valeur minimale prédéterminée.
